# EUROPEAN PATENT SPECIFICATION

(11) **EP 2 418 885 B1**
(45) Date of publication and mention of the grant of the patent: **12.02.2014**
(21) Application number: 09843877.3
(22) Date of filing: 30.04.2009
(51) Int. Cl.: H04W 16/00, H04L 27/26

(54) **UPLINK SIGNAL PROCESSING METHOD, BASE STATION AND USER TERMINAL**
AUFWÄRTSSTRECKENSIGNALVERARBEITUNGSVERFAHREN, BASISSTATION UND BENUTZERENDGERÄT
PROCÉDÉ DE TRAITEMENT DE SIGNAL MONTANT, STATION DE BASE ET TERMINAL D'UTILISATEUR

(43) Date of publication of application: 15.02.2012
(73) Proprietor: Huawei Technologies Co., Ltd., Longgang District, Shenzhen Guangdong 518129 (CN)
(72) Inventor: ZHOU, Mingyu, Shenzhen Guangdong 518129 (CN); WAN, Lei, Shenzhen Guangdong 518129 (CN); SONG, Weiwei, Shenzhen Guangdong 518129 (CN)
(74) Representative: Thun, Clemens
(86) International application number: PCT/CN2009/071589
(87) International publication number: WO 2010/124465

(56) References cited:
- CN-A- 101 213 807
- US-A1- 2008 084 845
- SIEMENS: 'Uplink Extended Cyclic Prefix Use Cases' 3GPP TSG-RAN WG1 #47BIS, R1-070306 19 February 2007, SORRENTO, ITALY, XP050104341
- HUAWEI: 'System performance evaluation for uplink CoMP' 3GPP TSG RAN WGL MEETING #56BIS, R1-091618 27 March 2009, SEOUL, KOREA, XP050339161
- HUAWEI: 'System performance evaluation for uplink CoMP' 3 GPP TSG RAN WG1 MEETING #56BIS, RL-091266 27 March 2009,
- 'Further Advancements for E-UTRA Physical Layer Aspects (Release 9)' 3GPP TR 36.814 V0.4.1 February 2009, XP050380817

## Description

### FIELD OF THE INVENTION

The present invention relates to the field of communications technologies, and in particular, to a method for processing an uplink signal, a base station (BS), and a user equipment (UE).

### BACKGROUND OF THE INEVNETION

At present, certain systems generally use CP (Cyclic Prefix, Cyclic Prefix) to reduce ISI (Inter-Symbol-Interference, Inter-Symbol-Interference). For example, an existing system can use normal CP or extended CP, where the normal CP has limited capability for reducing ISI but has a small overhead, and the extended CP can efficiently reduce the ISI, but has a large overhead.

In the future mobile communication system, the CoMP (Coordinated Multi-point transmission, Coordinated Multi-point transmission) technology is introduced. This technology is an important method for improving the overall performance of cells and the performance of cell edge UEs. Multiple cells can cooperate to transmit data to and receive data from a UE (User Equipment, User Equipment). Those cooperating cells may be connected to a same evolved eNodeB (Evolved NodeB, Evolved NodeB), or may be connected to different eNodeBs. The cells that cooperate to transmit data to and receive data from the UE are called the serving cells of the UE. A serving cell with one or all of the following functions is called the anchor cell of the UE: determining parameters for uplink transmission of the UE; sending signaling to the UE; jointly processing uplink signals of the UE. Other serving cells are called cooperative cells.

In uplink transmission, multiple cells cooperate to receive data from the UE. Generally, the system determines the serving cells of the UE according to the channel state between the UE and the cells. The distance between the UE and each serving cell may vary. Therefore, the uplink signal transmitted by the UE may arrive at multiple serving cells at different time points. If the arrival time of the uplink signal at a cell is too much earlier or later than the expected time, signal receiving suffers severe ISI. In this case, even if the channel state between the UE and a cell is in good condition, the cell cannot normally receive the signal from the UE. This problem is referred to as uplink delay in the following. If the extended CP is used, the uplink delay can be greatly reduced. However, extended CP may introduce a large overhead.

SIEMENS: "Uplink extended cyclic prefix use cases", 3GPP TSG-RAN WG1 #47BIS, R1-070306 discloses the issue of the usage of the uplink slots with the extended CP. HUAWEI: "System performance evaluation for uplink CoMP", 3GPP TSG-RAN WG1 MEETING #56BIS R1-091618 discloses the issue of system performance evaluation for uplink CoMP. US2008/084845 A1 discloses a wireless communication system frame structure having variable sized cyclic prefix.

### SUMMARY

A method for processing an uplink signal, a BS, and a UE are provided in embodiments of the present invention to solve the uplink delay problem without introducing too large overhead.

To solve the preceding technical issue, a method for processing an uplink signal is provided in an embodiment of the present invention, including:
receiving an uplink signal that is generated according to CP configuration information and is sent by a UE, where the CP configuration information is used to identify a mapping relationship between a TTI and a CP type that is used by the uplink signal; and
determining, according to the CP configuration information, a CP type corresponding to the TTI for receiving the uplink signal, and processing the uplink signal according to the determined CP type,
wherein the CP type comprises a first CP type and a second CP type; the method further comprises:
   re-determining a TTI for sending an uplink retransmission signal when a CP type corresponding to a preset TTI for sending the uplink retransmission signal is different from a CP type used by an uplink initial transmission signal sent by the UE, wherein the re-determined TTI is after the preset TTI for sending the uplink retransmission signal, and uses the same CP type as the uplink initial transmission signal; and
   after re-determining the TTI for sending an uplink retransmission signal, notifying the re-determined TTI for sending the uplink retransmission signal to the UE through explicit signaling and notifying the re-determined TTI for sending the uplink retransmission signal to cooperative cells of the UE.

A method for processing an uplink signal is provided in an example of the present invention. The method includes:
receiving CP configuration information of an anchor cell, where the CP configuration information is used to identify a mapping relationship between a TTI and a CP type that is used by an uplink signal; and
processing the uplink signal according to a setting mode when the CP type used by the uplink signal sent by the UE is different from the CP type that is used by a local cell and is corresponding to the TTI of receiving the uplink signal, where the setting mode is to drop the uplink signal or process the uplink signal according to the CP type corresponding to the TTI of receiving the uplink signal in the CP configuration information.

A method for processing an uplink signal is provided in yet another embodiment of the present invention. The method includes:
receiving, by a UE, CP configuration information sent by an anchor cell, where the CP configuration information is used to identify a mapping relationship between a TTI and a CP type that is used by an uplink signal; and
determining, according to the CP configuration information, a CP type corresponding to the TTI for sending the uplink signal, generating an uplink signal according to the determined CP type, and sending the uplink signal,
wherein, the CP type comprises a first CP type and a second CP type, and a length of the first CP type is larger than that of the second CP type; the method further comprises:
   if a CP type that is corresponding to the preset TTI for sending the uplink retransmission signal and is sent by the UE is different from a CP type used by an uplink initial transmission signal sent by the UE, re-determining a TTI for sending an uplink retransmission signal wherein the re-determined TTI is after the preset TTI for sending the uplink retransmission signal, and uses the same CP type as the uplink initial transmission signal.

A BS is provided in an embodiment of the present invention, including:
a first receiving module, configured to receive CP configuration information that is generated according to CP configuration information and is sent by a UE, where the CP configuration information is used to identify a mapping relationship between a TTI and a CP type that is used by an uplink signal;
a first processing module, configured to determine, according to the CP configuration information, a CP type corresponding to the TTI for receiving the uplink signal, and processing the uplink signal according to the determined CP type; and
a retransmission monitoring module, configured to: re-determine a TTI for sending an uplink retransmission signal when a CP type corresponding to a preset TTI for sending the uplink retransmission signal is different from a CP type used by an uplink initial transmission signal sent by the UE, wherein the re-determined TTI is after the preset TTI for sending the uplink retransmission signal and uses the same CP type as the uplink initial transmission signal; after the TTI for sending the uplink retransmission signal is re-determined, the re-determined TTI for sending the uplink retransmission signal is notified to the UE through explicit signaling; and the re-determined TTI for sending the uplink retransmission signal is notified to cooperative cells of the UE.

A BS is provided in an example of the present invention, including:
a second receiving module, configured to receive CP configuration information of an anchor cell; and
a second processing module, configured to process the uplink signal according to a setting mode when the CP type used by the uplink signal sent by the UE is different from the CP type that is used by a local cell and is corresponding to the TTI of receiving the uplink signal, where the setting mode is to drop the uplink signal or process the uplink signal according to the CP type corresponding to the TTI of receiving the uplink signal in the CP configuration information.

A UE is provided in an embodiment of the present invention. The UE includes:
a receiving module, configured to receive CP configuration information sent by an anchor cell, where the CP configuration information is used to identify a mapping relationship between a TTI and a CP type that is used by an uplink signal;
a processing module, configured to determine, according to the CP configuration information, a CP type corresponding to the TTI for sending the uplink signal, generate an uplink signal according to the determined CP type, and send the uplink signal; and
a retransmission monitoring module, configured to: re-determine a TTI for sending an uplink retransmission signal when a CP type corresponding to a preset TTI of sending the uplink retransmission signal is different from a CP type used by an uplink initial transmission signal sent by the UE, wherein the re-determined TTI is after the preset TTI for sending the uplink retransmission signal, and uses the same CP type as the uplink initial transmission signal.

The benefits of the embodiments of the present invention are as follows:
When the technical solutions provided in the embodiments of the present invention are used, the UE can use different CP types for different TTIs. Therefore, the uplink delay issue can be solved without introducing too large overhead.

### BRIEF DESCRIPTION OF THE DRAWINGS

To clearly illustrate the embodiments of the present invention or technical solution in prior art, the accompanying drawings that need to be used for illustrating the embodiments of the present invention or the prior art are briefly described. Apparently, the accompanying drawings described in the following are merely about some embodiments of the present invention. Those skilled in the art can obtain other drawings according to these drawings without any creative effort.
FIG. 1 shows a flow chart of a method for processing an uplink by an anchor cell or its corresponding processing apparatus provided in an embodiment of the present invention;
FIG. 2 shows a flow chart of a method for processing an uplink signal by a UE provided in an embodiment of the present invention;
FIG. 3 shows a first CP configuration information scheme provided in a first embodiment of the present invention;
FIG. 4 shows a second CP configuration information scheme provided in the first embodiment of the present invention;
FIG. 5 shows a flow chart of a method for processing an uplink signal by a serving cell provided in the first embodiment of the present invention;
FIG. 6 is a schematic diagram of a TTI when different CP types are used provided in the first embodiment of the present invention;
FIG. 7 is a structure diagram of a BS provided in a second embodiment of the present invention;
FIG. 8 is a structure diagram of another BS provided in an example of the present invention; and
FIG. 9 is a structure diagram of a UE provided in the second embodiment of the present invention.

### DETAILED DESCRIPTION

The technical solutions of the embodiments of the present invention are elaborated clearly and comprehensively below with reference to accompanying drawings of the embodiments of the present invention. Evidently, the embodiments described below are merely some rather than all embodiments of the present invention.

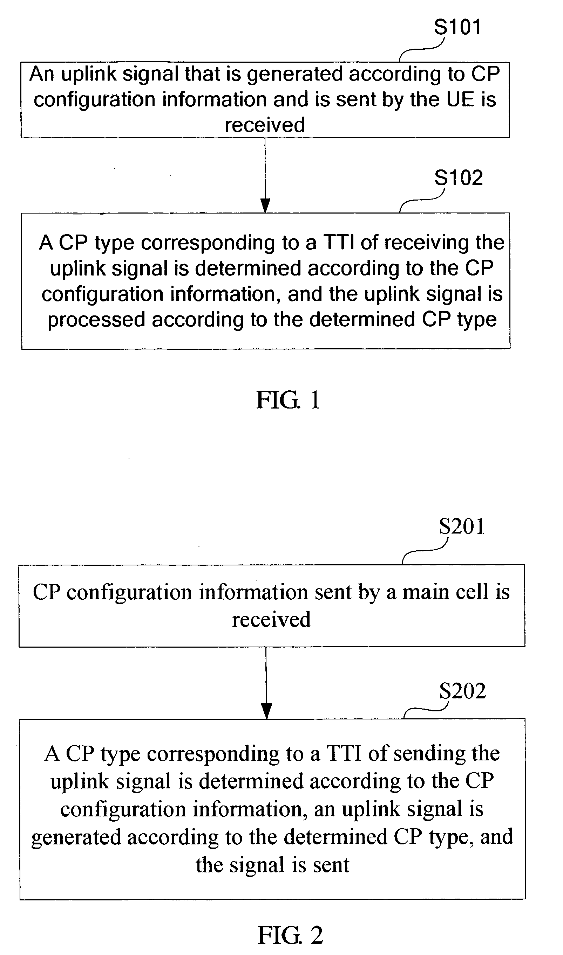

In an embodiment of the present invention, the case in which one UE corresponds to one anchor cell is taken as an example for illustration. The present invention, however, is not confined to this case that one UE has only one anchor cell. This embodiment provides the method for processing an uplink signal by the anchor cell or its corresponding processing apparatus of the UE as shown in FIG. 1. The method includes the following steps:
Step 101: receiving an uplink signal that is generated according to CP configuration information and is sent by a UE, where:
   the CP configuration information is used to identify a mapping relationship between a TTI and a CP type that is used by the uplink signal;
   the CP configuration information can be sent by the anchor cell to the UE. The specific implementation is not limited thereto as long as the anchor cell and its UE use the same CP configuration information; and
Step 102: determining, according to the CP configuration information, a CP type corresponding to the TTI of receiving the uplink signal, and processing the uplink signal according to the determined CP type.
   Processing the uplink signal according to the determined CP type means to read corresponding information from the uplink signal according to the format of the CP type.
   A method for processing an uplink signal by a UE is provided in an embodiment of the present invention as shown in FIG. 2. The method includes:
Step 201: receiving CP configuration information sent by an anchor cell, where for the CP configuration information, refer to the preceding description; and
Step 202: determining, according to the CP configuration information, a CP type corresponding to the TTI of sending the uplink signal, generating an uplink signal according to the determined CP type, and sending the uplink signal.

It can be seen that: in the technical solutions provided in the embodiment of the present invention, the anchor cell sends configuration signaling that includes CP configuration information to the UE; the UE generates an uplink signal in each TTI according to the CP configuration information and sends the uplink signal; the cell that receives this uplink signal can determine a CP type corresponding to the current TTI according to the CP configuration information stored locally to process the uplink signal according to the determined CP type.

According to the technical solutions provided in this embodiment of the present invention, the UE can use different CP types in the case of different TTIs, and a long CP can solve the uplink delay issue while a short CP introduces a small overhead. Therefore, the technical solutions provided in this embodiment of the present invention can solve the uplink delay issue without introducing too large overhead. In the embodiment of the present invention, a case in which the different CP types used by the UE in the case of different TTIs are CPs of different lengths is taken as an example for illustration. The present invention, however, is not confined to classification of CP types by length. The following takes different CP lengths for example to represent different CP types, which is not repeatedly described.

In the embodiment of the present invention, the anchor cell can schedule a UE with an uplink delay issue to a TTI that uses a long CP to avoid the uplink delay issue, and schedule a UE without the uplink delay issue to a TTI that uses a short CP. In this way, the overhead may not be increased for these UEs. No sequence is required for the preceding scheduling and other operations of the anchor cell. The TTI proportions for different CP lengths can be adjusted according to the system condition. Therefore, a high flexibility is achieved.

The following describes in detail the technical solutions in the embodiments of the present invention with reference to the combining drawings in the embodiments of the present invention.

### Embodiment 1

In this embodiment, the anchor cell can configure a UE for uplink communication, and CP configuration information of configuring the UE can be sent, for example, through configuration signaling, to the UE. The CP configuration information is used to identify a mapping relationship between the TTI and the CP length used by the uplink signal, that is, identify different CP lengths used in different TTIs. In the embodiment, two different CP lengths are taken as an example for illustration. The CP lengths can be called a first CP length and a second CP length that are corresponding to a first CP type and a second CP type respectively. The length of the first CP type is larger than that of the second CP type. That is, the first CP length is larger than the second CP length. Then, the CP configuration information may include any of the following information:
1. Period of the TTI that uses the first CP length
2. Period of the TTI that uses the second CP length
3. Number of the TTI that uses the first or second CP length within a setting period, or the number of TTIs that use the first or second CP length within a setting period and a preset configuration rule

For example, in the third CP configuration information, the preset rule can be as follows: The number of the TTI that firstly uses the first CP length is 10, the number of the TTI that secondly uses the first CP length is 5, and the number of the TTI that thirdly uses the first CP length is 1. According the preceding setting, if the number of TTIs that use the first CP length is 1, the UE configures TTI numbered as 10 to use the first CP length. If the number of TTIs that use the first CP length is 2, the UE configures TTI numbered as 5 and TTI numbered as 10 to use the first CP length. The same is deducted through analogy.

In specific application, for example, the long CP used can be extended CP, and the short CP used can be normal CP. In the preceding CP configuration information, it can be identified that certain TTIs can use the short CP, and other TTIs can use the long CP.

In this embodiment, the UE corresponding to the same anchor cell uses the same CP configuration. Different anchor cells can use different or same CP configuration. When CP configuration information is allocated for the anchor cells, the CP configuration information can be allocated to anchor cells in the unit of cell or cell cluster. That is, each cell can have its own CP configuration, or each cell cluster can have its own CP configuration. One cell cluster may include one or multiple cells. The cells in a cell cluster can be semi-static or dynamic. The cells in a cell cluster have a specific number, for example, cell cluster identity ID (Identity, Identity).

The anchor cell is used to configure configuration signaling of the UE, for example, air interface signaling that can be transferred through a BCH (Broadcasting Channel, Broadcasting Channel) or through higher layer signaling. The BCH can be a PBCH (Physical BCH, Physical BCH), or a DBCH (Dynamic BCH, Dynamic BCH). For example, the anchor cell can notify the UE of the CP configuration information through configuration signaling when the UE accesses the cell, and/or encounters handover, and/or changes the serving cell.

After obtaining the CP configuration information, the UE can use the method as shown in FIG. 2 to process the uplink signal. The uplink signal may include the signal that carries uplink data, the signal that carries uplink control information, and the signal used for sounding. The signal that carries uplink data, for example, can be transmitted through a PUSCH (Physical Uplink Share Channel, Physical Uplink Share Channel). The signal that carries uplink control information, for example, can be transmitted through a PUCCH (Physical Uplink Control Channel, Physical Uplink Control Channel). The signal used for sounding, for example, can be a SRS (Sounding Reference Signal, Sounding Reference Signal).

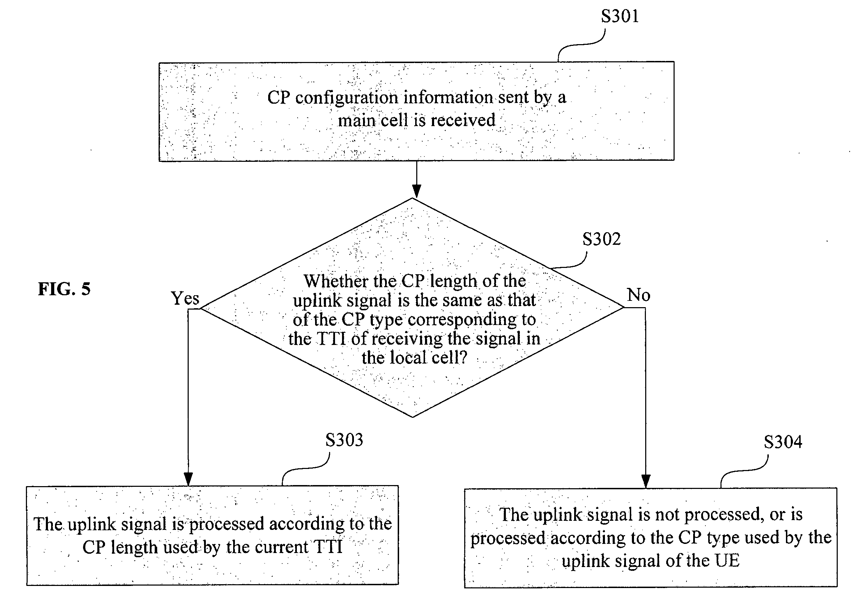

In the CoMP system, the uplink signal sent by the UE can be received by multiple serving cells. The multiple serving cells may use different CP configurations. Therefore, in a certain TTI or certain TTIs, when the UE sends signal according to a short or long CP, a certain serving cell or certain serving cells may use a short or long CP to receive the signal. As a result, the signal cannot be normally received. Hence, to ensure normal working in the CoMP system, a method for processing an uplink signal in each serving cell is provided as shown in FIG. 5. The method includes the following steps:
Step 301: receiving CP configuration information of an anchor cell;
   Particularly, after CP configuration information of the anchor cell is received, the CP configuration information can be stored. In this step, the anchor cell can transfer the CP configuration information of the anchor cell to the neighboring cells of the anchor cell. The transfer can be implemented through one or any combination of wireless connection, optical fiber, X2 interface, and S1 interface. The neighboring cells can include, for example, the geologically neighboring cells of the cell and/or cells in cooperating relationship with the cell. The cooperating relationship is cooperative sending and/or receiving. Particularly, the configuration information can be included in the neighboring cell list on a SON (Self-Optimization Network, Self-Optimization Network);
Step 302: determining, according to the CP configuration information, whether a CP length used by an uplink signal of a UE is the same as a CP length used by a TTI of the uplink signal when the uplink signal from the UE has been received, if the CP length used by the uplink signal of the UE is the same as the CP length used by the TTI of the uplink signal, executing step 303; if the CP length used by the uplink signal of the UE is not the same as the CP length used by the TTI of the uplink signal, confirming the difference, and executing 304.
Step 303: processing the uplink signal according to the CP length used by the TTI of receiving the uplink signal, and ending the process.
Step 304: performing receiving adjustment, and processing the uplink signal according to a setting mode.

The setting mode can be:
dropping the uplink signal; or
determining, according to the CP configuration information of the anchor cell, a CP type corresponding to a TTI of receiving the uplink signal, and processing the uplink signal according to the determined CP type.

In specific implementation, the serving cell can receive notification information of the processing mode corresponding to the anchor cell, and determine, according to the notification information of the processing mode, the setting mode of processing the uplink signal. No specific sequence exists for the step of receiving and determining the setting mode of processing the uplink signal and other steps mentioned above.

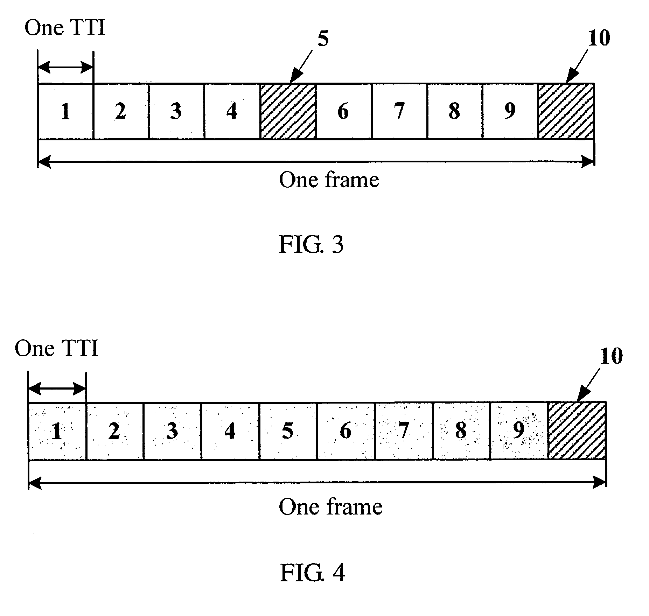

In specific implementation, certain CP configurations allocated to cells or cell clusters can overlap. That is, in the CP configuration for each cell or cell cluster, only a few TTIs use different CP lengths, and in the CP configurations for different cells or cell clusters, at least certain TTIs use the same CP length. For example, in an embodiment, cell 1 uses the CP configuration in scheme 1 as shown in FIG. 3, and cell 2 uses the CP configuration in scheme 2 as shown in FIG. 4. FIG. 3 and FIG. 4 identify the CP length used by each TTI in each frame of scheme 1 and scheme 2. The white part indicates a short CP. The italic part indicates a long CP. Each frame includes ten TTIs. In a frame, scheme 1 as shown in FIG. 3 compared with scheme 2 as shown in FIG. 4, only one TTI (fifth TTI) uses a different CP length. It can be seen that when cell 1 and cell 2 need to cooperate to receive the uplink signal sent by the UE, only the CP length used by the fifth TTI in each frame is different. That is, receiving adjustment only needs to be performed in the fifth TTI. It can be seen that each cell or cell cluster uses CP configurations that overlap to a certain extent, thereby reducing the processing of the serving cell, and lowering the possibility of errors. The receiving adjustment means to drop the received uplink signal without processing the uplink signal, or process the uplink signal according to the CP length of the uplink signal.

In a CoMP system that uses the retransmission technology, the serving cell of the UE during the first transmission and the serving cell of the UE during retransmission can be the same serving cell or different serving cells. The first transmission is called initial transmission in the following description. For example, when the initial transmission of the UE occurs in the TTI that uses the short CP, to avoid the uplink delay, the UE can be served by only cell 1 and cell 2. This is because if multiple serving cells serve the UE, a large delay may occur. The short CP has limited capability of reducing the ISI, and a severe ISI may occur during signal receive. Therefore, when a short CP is used, only two cells are selected to serve the UE. When the retransmission of the UE occurs in a TTI that uses a long CP, in order to obtain a better performance, the UE can be served by cell 1, cell 2, and cell 3. This is because a long CP can efficiently reduce the ISI, and multiple serving cells can be used to serve the UE.

To ensure that the cooperative cells of the UE can correctly receive uplink signals, the anchor cell needs to notify the uplink transmission related information of the UE to the cooperative cells of the UE. The uplink transmission related information includes the uplink signal that the serving cell should receive from the UE during initial transmission and/or during retransmission, uplink signal resource of the UE, and UE ID. In the embodiment of the present invention, the uplink transmission related information includes CP configuration information of the UE. In a system with the retransmission mechanism, the cooperative cells include a serving cell used for initial transmission and a serving cell used for retransmission. To enable the serving cell used for initial transmission and the serving cell used for the retransmission to obtain the uplink transmission related information of the UE in initial transmission and in retransmission, the anchor cell can first determine the cooperative cells of the UE, and then notify the uplink transmission related information of the UE to the cooperative cells of the UE through interfaces between cells. The anchor cell can also determine each serving cell used for the initial transmission and each serving cell used for the retransmission of the UE, notify the uplink transmission related information of the UE during initial transmission to the serving cell used for the initial transmission, and notify the uplink transmission related information of the UE during retransmission to the serving cell used for the retransmission, thereby saving mutual signaling. After determining the cooperative cells of the UE, the anchor cell can send the CP configuration information of the anchor cell to the cooperative cells of the UE.

The mode of determining cooperative cells of the UE by the anchor cell can include one or any combination of the following:
(1) Receiving serving cell collection information sent by a UE, and determining cooperative cells of the UE according to the serving cell collection information.
   When this mode is used, the UE detects the downlink signal, for example, RS(Reference Signal, Reference Signal) of each cell, determines the serving cell of the UE through calculation, and reports the obtained serving cell collection information through the uplink feedback to the anchor cell. The anchor cell determines the serving cell of the UE according to the feedback, where the serving cell can include the serving cell during initial transmission and/or the serving cell during retransmission. The anchor cell notifies information to the serving cell of the UE through the interface between cells to enable the serving cell to obtain uplink transmission related information including the uplink signal that the serving cell should receive from the UE during initial transmission and/or during retransmission, uplink signal resource of the UE, and UE ID. It can be seen that the reason that the UE sends the serving cell collection information to the anchor cell is to enable the anchor cell to learn the UE's serving cell collection. No specific sequence exists for the operation of sending the serving cell collection information to the anchor cell and other operations of the anchor cell.
(2) Receiving a notification message sent by each cell, and determining cooperative cells of the UE according to the notification message, where the notification message is used to indicate whether the cell is a cooperative cell of the UE.
   When this mode is used, each cell detects the uplink signal of the UE, determines, through calculation, whether the local cell serves the UE, including whether the local cell serves the UE during initial transmission and/or whether the local cell serves the UE during retransmission, and sends a notification message of whether the local cell is a serving cell of the UE to the anchor cell of the UE. Each cell can determine whether the local cell is a serving cell of the UE according to the signal quality of the signal received from the UE. The anchor cell notifies related information to the serving cell of the UE through the interface between cells to enable the serving cell to learn related information, where the interface between cells include wireless connections, optical fibers, X2 interface and/or S 1 interface; and related information includes the uplink signal resource of the UE and UE ID.
(3) Receiving channel state information between the UE and each cell sent by each cell, and determining whether each cell is a cooperative cell of the UE according to the received channel state information.

When this mode is used, each cell receives an uplink signal of the UE, and transfers related information about the channel state between the UE and the cell through an interface between cells. The interface can include the wireless connection, optical fiber, X2 interface and/or S1 interface. The anchor cell determines, according to the information, whether the cell serves the UE, including whether the local cell serves the UE during initial transmission and/or whether the local cell serves the UE during retransmission. The anchor cell notifies information to the serving cell of the UE through the interface between cells to enable the serving cell to learn related information, including uplink signal resource of the UE, and UE ID, and the uplink signal that the serving cell receives from the UE during initial transmission and/or during retransmission.

The serving cell receives the uplink signal of the UE according to the uplink signal resource of the UE and UE ID, and the serving cell can decode the uplink signal of the UE and transfer the decoded uplink signal to the anchor cell for joint processing. Or, the serving cell directly transfers the received signal to the anchor cell without decoding the received signal, and the anchor cell carries out joint decoding after receiving the signal.

It can be seen that the reason that the anchor cell notifies the uplink transmission related information of the UE to the serving cell is to enable the serving cell to perform subsequent operations. No specific sequence exists for the notifying operation and other operations of the anchor cell.

The CP length used by the TTI used by the initial transmission signal of the UE may be different from the CP length used by the TTI used by the retransmission signal. Therefore, the information volume that can be carried by the initial transmission signal is different from the information volume that can be carried by the retransmission signal, and the sending and receiving of the initial transmission signal and the retransmission signal need to be coordinated. In this case, the UE can use a parameter during retransmission that is different from the parameter during initial transmission to generate and send signals. The parameter may include the encoding rate and interleaving mode. Or, the UE can use the shortened, stuffing, or other modes to generate and send signals.

If the CP type used by the uplink initial transmission signal sent by the UE is the first CP type, but the CP type corresponding to the preset TTI of sending the uplink retransmission signal is the second CP type, during generation of the uplink retransmission signal, an encoding rate that is lower than that used for generating the uplink initial transmission signal is used.

If the CP type used by the uplink initial transmission signal sent by the UE is the second CP type, but the CP type corresponding to the preset TTI of sending the uplink retransmission signal is the first CP type, during generation of the uplink retransmission signal, an encoding rate that is higher than that used for generating the uplink initial transmission signal is used, or only part of the bit-level or symbol-level data is transmitted.

If a CP type that is corresponding to the preset TTI of sending the uplink retransmission signal and is sent by the UE is inconsistent with a CP type used by an uplink initial transmission signal sent by the UE, a TTI of sending the uplink retransmission signal is re-determined where the re-determined TTI is after the preset TTI of sending the uplink retransmission signal, and uses the same CP type as the uplink initial transmission signal.

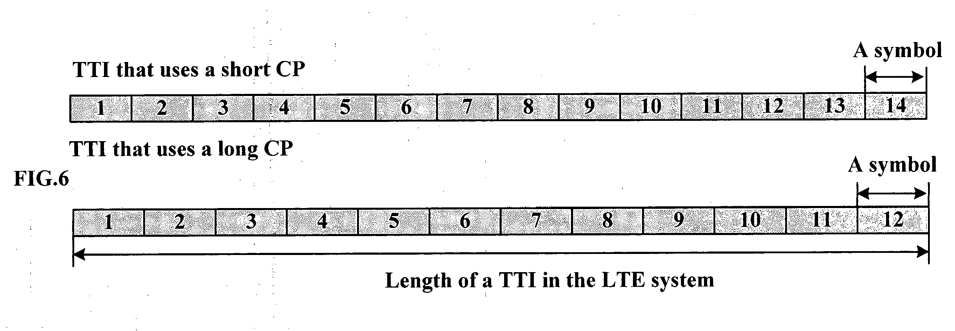

In an example of the embodiment as shown in FIG. 6, for the length of one TTI in the system, the TTI that uses the short CP has 14 symbols and the TTI that uses the long CP has only 12 symbols. If the TTI of the uplink initial transmission signal of the UE uses the short CP, and the preset TTI of sending the uplink retransmission signal uses the long CP, available resources in retransmission become fewer. The UE can use an encoding rate that is higher than that used in initial transmission, or use the shortened mode without changing the encoding rate to transmit only a part of bit-level or symbol-level data. If the TTI of the uplink initial transmission signal of the UE uses the long CP, and the preset TTI of the uplink retransmission signal uses the short CP, available resources in retransmission become more. The UE can use an encoding rate that is lower than that used in initial transmission, or use the stuffing mode without changing the encoding rate, where the stuffing mode can be: to stuff certain useless information to the excessive resources, or transmit no signal in the excessive resources, or transmit other information in the excessive resources. Specifically, the system supports multiple modes, and can notify the UE of the used mode through downlink signaling. The specific implementation can include, for example, the following: the anchor cell determines the processing mode that should be used by the UE, notifies the corresponding serving cell of the processing mode through the interface between cells, and notifies the UE of the processing mode through the air interface; in this case, the UE uses the shortened, stuffing, or other mode to generate and send signals according to the processing mode notified by the anchor cell, and the serving cell of the UE receives the signals according to a corresponding mode.

Further, when the CP length used by the TTI of the initial transmission signal of the UE and the CP length used by the TTI of the retransmission signal are different, retransmission can be delayed for one or more TTIs. For example, retransmission can be delayed until a next TTI that uses the same CP length as that used in initial transmission. When the retransmission is delayed until the next TTI that uses the same CP length as an TTI used in initial transmission, the UE does not need to use an encoding rate that is used for the retransmission signal and is different from an encoding rate used for the initial transmission signal, or the UE does not need to shorten or stuff the information. The encoding rate and information volume of the initial transmission signal and the encoding rate and information volume of the retransmission signal are consistent, thereby simplifying the UE processing. Specifically, the mode of delaying retransmission can be as follows:
(1) The anchor cell monitors the CP lengths of the initial transmission signal and retransmission signal for the UE belonging to the anchor cell. If the CP length corresponding to the preset TTI of sending the uplink retransmission signal is inconsistent with the CP length used by the uplink initial transmission signal sent by the UE, the TTI of sending the uplink retransmission signal is re-determined, where the re-determined TTI is after the preset TTI of sending the uplink retransmission signal, and uses the same CP length as the uplink initial transmission signal. After the TTI of sending the uplink retransmission signal is re-determined, the re-determined TTI of sending the uplink retransmission signal is notified to the UE through explicit signaling, and is notified to the cooperative cells. After receiving the notification, the cooperative cells learn the TTI corresponding to the uplink retransmission signal.
   Accordingly, the UE sends the uplink initial transmission signal, and then receives from the anchor cell the explicit signaling used for notifying the TTI of sending the uplink retransmission signal corresponding to the uplink initial transmission signal. The UE generates the uplink retransmission signal according to the CP length used by the uplink initial transmission signal, and sends the retransmission signal in the TTI notified in the explicit signaling.
(2) The UE monitors the CP lengths of the initial transmission signal and retransmission signal. If the CP length corresponding to the preset TTI of sending the uplink retransmission signal is inconsistent with the CP length used by the uplink initial transmission signal sent by the UE, the TTI corresponding to the CP length used by the uplink initial transmission signal after the preset TTI of sending the uplink retransmission signal is determined as the TTI of sending the uplink retransmission signal, the uplink retransmission signal is generated according to the CP length used by the uplink initial transmission signal, and the retransmission signal is sent in the determined TTI.

In specific implementation, after the UE sends initial transmission data at moment n (n>0), if the BS cannot correctly decode the data, generally a NACK (Negative Acknowledgement, Negative Acknowledgement) needs to be fed back to the UE through downlink signaling at moment n+n1 (n1>n). For example, the downlink signaling can be transmitted through a PHICH (Physical Hybrid Automatic Repeat Request Indicator Channel, Physical Hybrid Automatic Repeat Request Indicator Channel). If the UE receives the NACK, the data is retransmitted at moment n+n2.

A case that the anchor cell monitors the CP lengths of the initial transmission signal and retransmission signal of the UE belonging to the anchor cell is taken as an example for illustration.

If the CP length used at moment n and the CP length used at moment n+n2 in the anchor cell of the UE are different, the NACK can be fed back at moment n+n3 (n3>n1) through downlink signaling but does not need to be fed back at moment n+n1, and this adjustment is notified to the UE through explicit signaling. After receiving the explicit signaling, the UE receives NACK at moment n+n3. If NACK is received, the data is retransmitted at moment n+n4, where, preferably, moment n+n4 is a TTI that firstly uses the same CP length as that at moment n after moment n+n1.

If the CP length used at moment n and the CP length used at moment n+n2 in the anchor cell of the UE are different, that is, the CP length corresponding to the preset TTI of sending the uplink retransmission signal is inconsistent with the CP length used by the uplink initial transmission signal, NACK can still be fed back through downlink signaling at moment n+n1. The UE does not sends the uplink retransmission signal in the preset TTI of sending the uplink retransmission signal (that is, moment n+n2), but the UE sends the uplink retransmission signal in the next TTI (that is, moment n+n3) corresponding to the CP length used by the uplink initial transmission signal after preset TTI of sending the uplink retransmission signal, and generates the uplink retransmission signal according to the CP length used by the uplink initial transmission signal. For example, according to an embodiment, in the configuration information of the anchor cell of the UE, only TTI 1 and TTI 10 in a frame use a long CP. The UE sends the initial transmission signal in TTI 1, and the initial transmission signal uses the long CP. After the NACK is received, the retransmission signal is supposed to be sent in the preset TTI 9, and the preset TTI 9 is corresponding to a short CP that is inconsistent with the CP length of the initial transmission signal. In this case, the long CP can be used to generate a retransmission signal, and the retransmission signal is sent in a TTI (TTI 10) that firstly uses a long CP after TTI 9.

The relationship between n2 and n1, and the relationship between n4 and n3 may be preset, or may be notified by the anchor cell to the UE through downlink signaling.

### Embodiment 2

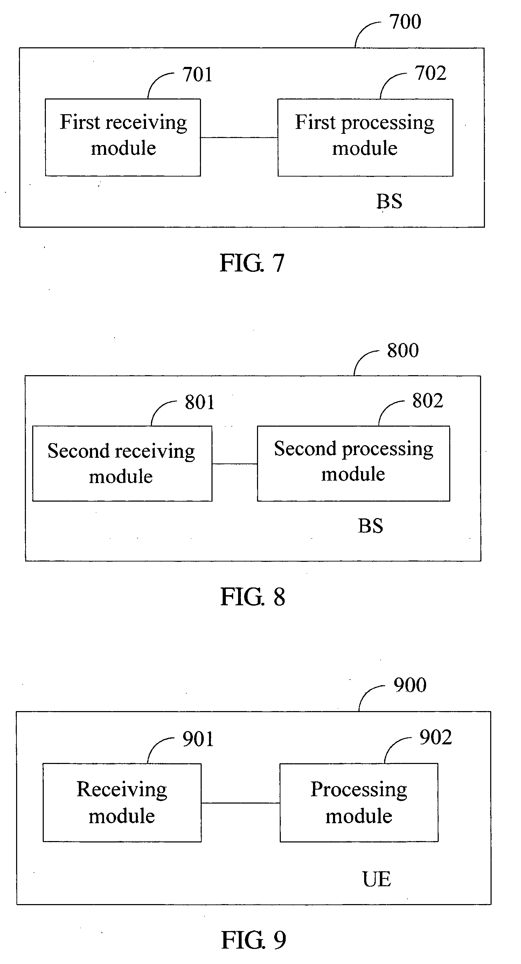

A UE 700 is provided in an embodiment of the present invention as shown in FIG. 7, including:
a first receiving module 701, configured to receive an uplink signal that is generated according to CP configuration information and is sent by a UE, where the CP configuration information is used to identify a mapping relationship between a TTI and a CP type used by the uplink signal; and
a first processing module 702, configured to determine, according to the CP configuration information, a CP type corresponding to the TTI of receiving the uplink signal, and processing the uplink signal according to the determined CP type.

For the BS 700, regardless of the CP type used by the UE to generate the uplink signal, the BS 700 can determine the CP type used by the received uplink signal according to the CP configuration information that is the same as that of the UE, thereby correctly processing the uplink signal. It can be seen that the UE can use different CP types in different TTIs, and the BS 700 can correctly receive the uplink signal in each TTI. Therefore, the uplink delay issue can be solved without introducing too large overhead.

Further, the BS 700 may further include:
a cooperative cell determining cell, configured to determine cooperative cells of the UE; and
a first notifying module, configured to notify the CP configuration information of the UE to the cooperative cells of the UE determined by the cooperative cell determining module.

For the mode for determining the serving cell collection of the UE by the cooperative cell determining module, refer to the modes for determining cooperative cells of the UE in the first embodiment.

Further, the BS 700 may further include:
a retransmission monitoring module, configured to: re-determine a TTI of sending an uplink retransmission signal when a CP type corresponding to a preset TTI of sending the uplink retransmission signal is inconsistent with a CP type used by an uplink initial transmission signal sent by the UE, where the re-determined TTI is after the preset TTI of sending the uplink retransmission signal and uses the same CP type as the uplink initial transmission signal; after the TTI of sending the uplink retransmission signal is re-determined, the re-determined TTI of sending the uplink retransmission signal is notified to the UE through explicit signaling; and the re-determined TTI of sending the uplink retransmission signal is notified to cooperative cells of the UE.

When the retransmission is delayed until the next TTI that uses the same CP length as a TTI used in initial transmission, the UE does not need to use an encoding rate that is used for the retransmission signal and is different from an encoding rate used for the initial transmission signal, or the UE does not need to shorten or stuff the information. The encoding rate and information volume of the initial transmission signal and the encoding rate and information volume of retransmission signal are consistent, thereby simplifying the UE processing.

Further, the BS 700 can include: a configuring module, configured to send CP configuration information to the UE.

Another BS 800 provided in an example of the present invention as shown in FIG. 8 includes:
a second receiving module 801, configured to receive CP configuration information of an anchor cell; and
a second processing module 802, configured to process the uplink signal according to a setting mode when the CP type used by the uplink signal sent by the UE is different from the CP type that is used by a local cell and is corresponding to the TTI of receiving the uplink signal, where the setting mode is to drop the uplink signal or process the uplink signal according to the CP type corresponding to the TTI of receiving the uplink signal in the CP configuration information.

In this example, the BS 800 is the BS corresponding to the cooperative cells. For the BS 800, the CP configuration information of the anchor cell is obtained. Therefore, the uplink signal sent by the UE corresponding to the anchor cell can be correctly processed.

Further, the BS 800 may further include:
a detecting module, configured to detect an uplink signal of the UE, determine whether it is a serving cell of the UE, and notify the anchor cell of the determined result.

The BS determines whether it is a serving cell, thereby simplifying operations of a terminal.

Further, the BS 800 may include:
a second notifying module, configured to notify the anchor cell of channel state information between the UE and itself.

Whether it is a serving cell is not determined locally in the cooperative cells. Therefore, local operations of the cooperative cells can be simplified.

Further, the BS 800 may include:
a storing module, configured to store the CP configuration information received by the receiving module, and provide the CP configuration information to the second processing module.

The UE 900 provided in an embodiment of the present invention as shown in FIG. 9 includes:
a receiving module 901, configured to receive CP configuration information sent by an anchor cell, where the CP configuration information is used to identify a mapping relationship between a TTI and a CP type used by an uplink signal; and
a processing module 902, configured to determine, according to the CP configuration information, a CP type corresponding to the TTI of sending the uplink signal, generate an uplink signal according to the determined CP type, and send the uplink signal.

The UE 900 uses the CP configuration information configured by the anchor cell to generate the uplink signal. Therefore, the anchor cell and the cooperative cells notified by the anchor cell can determine, according to the CP configuration information, the CP type used by the received uplink signal, thereby correctly processing the uplink signal. It can be seen that the UE can use different CP types in different TTIs, and the anchor cell and cooperative cells can correctly receive the uplink signal in each TTI. Therefore, the uplink delay issue can be solved without introducing too large overhead.

Further, the UE 900 may include:
a detecting module, configured to detect a downlink signal of each cell, determine a serving cell of the UE, and send the obtained serving cell collection information to the anchor cell.

The UE detects the serving cell that serves the UE, thereby simplifying operations of the BS.

Further, the UE 900 may include:
a retransmission monitoring module, configured to: re-determine a TTI of sending an uplink retransmission signal when a CP type corresponding to a preset TTI of sending the uplink retransmission signal is inconsistent with a CP type used by an uplink initial transmission signal sent by the UE, where the re-determined TTI is after a preset TTI of sending the uplink retransmission signal, and uses the same CP type as the uplink initial transmission signal.

Further, the receiving module can be configured to receive from the anchor cell explicit signaling used for notifying the TTI of sending the uplink retransmission signal corresponding to the uplink initial transmission signal. In this case, the UE may further include:
a retransmitting module, configured to generate the uplink retransmission signal according to a CP type used by the uplink initial transmission signal when the receiving module receives the explicit signaling, and send the retransmission signal in the TTI notified in the explicit signaling.

When the retransmission is delayed until the next TTI that uses the same CP length as an TTI used in initial transmission, the UE does not need to use an encoding rate that is used for the retransmission signal and is different from an encoding rate used for the initial transmission signal, or the UE does not need to shorten or stuff the information. The encoding rate and information volume of the initial transmission signal and the encoding rate and information volume of the retransmission signal are consistent, thereby simplifying the UE processing. In addition, the processing is performed by a terminal, thereby simplifying operations of the BS.

Further, the UE 900 may include:
a storing module, configured to store the CP configuration information received by the receiving module, and provide the CP configuration information to the processing module.

Those skilled in the art can understand that all or part of the steps in the preceding method can be implemented by using a program instructing relevant hardware. The program can be stored in a storage medium that can be read by a computer. When the program runs, one or any combination of the steps in the preceding method embodiments can be included.

In addition, all function units in each embodiment of the present invention can be integrated into a processing module, or each function unit can exist as an independent physical unit, or two or more units can be integrated into one module. The integrated modules can be implemented through hardware or through software function modules. If the integrated modules are implemented through software function modules, and are sold or used as independent products, the integrated modules can be stored in a storage medium that can be read by a computer.

The preceding storage medium can be a read-only storage, a disk, or a CD (compact disk, compact disk).

Those skilled in the art can understand that all or part of the steps in the preceding method can be implemented by using a program instructing relevant hardware. The program can be stored in a storage medium that can be read by a computer. When the program runs, the steps of the method embodiments can be included.

In addition, all function units in each embodiment of the present invention can be integrated into a processing module, or each function unit can exist as an independent physical unit, or two or more units can be integrated into one module. The integrated modules can be implemented through hardware or through software function modules. If the integrated modules are implemented through software function modules, and are sold or used as independent products, the integrated modules can be stored in a storage medium that can be read by a computer.

The preceding storage medium can be a read-only storage, a disk, or a CD (compact disk, compact disk).

Apparently, various modifications and variations may be made by those skilled in the art without departing from the scope of the present invention as defined by the appended claims.

## Claims

1. A method for processing an uplink signal, comprising:
receiving an uplink signal that is generated according to cyclic prefix, CP, configuration information and is sent by a user equipment, UE, wherein, the CP configuration information is used to identify a mapping relationship between a transmission time interval, TTI, and a CP type that is used by the uplink signal; and
determining, according to the CP configuration information, a CP type corresponding to a TTI for receiving the uplink signal, and processing the uplink signal according to the determined CP type,
**characterized in that**
the CP type comprises a first CP type and a second CP type and the method further comprises:
re-determining a TTI for sending an uplink retransmission signal when a CP type corresponding to a preset TTI for sending the uplink retransmission signal is different from a CP type used by an uplink initial transmission signal sent by the UE, wherein the re-determined TTI is after the preset TTI for sending the uplink retransmission signal, and uses the same CP type as the uplink initial transmission signal; and
after re-determining the TTI for sending an uplink retransmission signal, notifying the re-determined TTI for sending the uplink retransmission signal to the UE through explicit signaling and notifying the re-determined TTI for sending the uplink retransmission signal to cooperative cells of the UE.

2. The method according to claim 1, the method further comprising: determining the cooperative cells of the UE, and notifying the CP configuration information of the UE to the cooperative cells of the UE.

3. The method according to claim 2, wherein, the cooperative cells of the UE comprise a serving cell used for initial transmission and a serving cell used for retransmission; and
notifying the CP configuration information of the UE to the cooperative cells of the UE comprises:
notifying the CP configuration information of the UE during initial transmission to the serving cell used for initial transmission, and notifying the CP configuration information of the UE during retransmission to the serving cell used for retransmission.

4. The method according to any one of claims 2 to 3, wherein, determining the cooperative cells of the UE comprises any or any combination of the following:
receiving serving cell collection information sent by the UE, and determining the cooperative cells of the UE according to the serving cell collection information;
receiving a notification message sent by each cell, and determining the cooperative cells of the UE according to the notification message, wherein the notification message is used to indicate whether the cell is a cooperative cell of the UE; and
receiving channel state information between the UE and each cell sent by each cell, and determining the cooperative cell of the UE according to the channel state information.

5. The method according to claim 1, the method further comprising:
scheduling the UE to a TTI that uses a long CP when the UE encounters an uplink delay issue; and
scheduling the UE to a TTI that uses a short CP when the UE does not encounter an uplink delay issue.

6. The method according to claim 1, wherein, before receiving the uplink signal sent by the UE, the method further comprises: sending CP configuration information to the UE.

7. A method for processing an uplink signal, comprising:
receiving, by a user equipment, UE, cyclic prefix, CP, configuration information sent by an anchor cell, wherein the CP configuration information is used to identify a mapping relationship between a transmission time interval, TTI, and a CP type that is used by an uplink signal; and
determining, according to the CP configuration information, a CP type corresponding to the TTI for sending the uplink signal, generating an uplink signal according to the determined CP type, and sending the uplink signal,
**characterized in that**
the CP type comprises a first CP type and a second CP type, and a length of the first CP type is larger than that of the second CP type and the method further comprises:
if a CP type that is corresponding to the preset TTI for sending the uplink retransmission signal and is sent by the UE is different from a CP type used by an uplink initial transmission signal sent by the UE, re-determining a TTI for sending an uplink retransmission signal wherein the re-determined TTI is after the preset TTI for sending the uplink retransmission signal, and uses the same CP type as the uplink initial transmission signal.

8. The method according to claim 7, further comprising: detecting, by the UE, a downlink signal of each cell, determining a serving cell of the UE, and sending obtained serving cell collection information to the anchor cell.

9. The method according to claim 7, further comprising:
receiving from the anchor cell explicit signaling used for notifying a TTI for sending an uplink retransmission signal, generating the uplink retransmission signal according to the CP type used by the uplink initial transmission signal, and sending the retransmission signal in the TTI notified in the explicit signaling.

10. A base station, BS, comprising:
a first receiving module(701), configured to receive an uplink signal that is generated according to cyclic prefix, CP, configuration information and is sent by a user equipment, UE, wherein the CP configuration information is used to identify a mapping relationship between a transmission time interval, TTI, and a CP type that is used by the uplink signal;
a first processing module(702), configured to determine, according to the CP configuration information, a CP type corresponding to a TTI for receiving the uplink signal, and processing the uplink signal according to the determined CP type;
**characterized in that**
the BS further comprises:
a retransmission monitoring module, configured to: re-determine a TTI for sending an uplink retransmission signal when a CP type corresponding to a preset TTI for sending the uplink retransmission signal is different from a CP type used by an uplink initial transmission signal sent by the UE, wherein the re-determined TTI is after the preset TTI for sending the uplink retransmission signal and uses the same CP type as the uplink initial transmission signal; after the TTI for sending the uplink retransmission signal is re-determined, the re-determined TTI for sending the uplink retransmission signal is notified to the UE through explicit signaling; and the re-determined TTI for sending the uplink retransmission signal is notified to cooperative cells of the UE.

11. The BS according to claim 10, the BS further comprising:
a cooperative cell determining cell, configured to determine the cooperative cells of the UE; and
a first notifying module, configured to notify the CP configuration information of the UE to the cooperative cells of the UE determined by the cooperative cell determining module.

12. The BS according to claim 10, the BS further comprising:
a configuring module, configured to send CP configuration information to the UE.

13. A user equipment, comprising:
a receiving module, configured to receive cyclic prefix, CP, configuration information sent by an anchor cell, wherein the CP configuration information is used to identify a mapping relationship between a transmission time interval, TTI, and a CP type that is used by an uplink signal;
a processing module, configured to determine, according to the CP configuration information received by the receiving module, a CP type corresponding to a TTI for sending the uplink signal, generate an uplink signal according to the determined CP type, and send the uplink signal;
**characterized in that**
the user equipment further comprises:
a retransmission monitoring module, configured to: re-determine a TTI for sending an uplink retransmission signal when a CP type corresponding to a preset TTI for sending the uplink retransmission signal is different from a CP type used by an uplink initial transmission signal sent by the UE, wherein the re-determined TTI is after the preset TTI for sending the uplink retransmission signal, and uses the same CP type as the uplink initial transmission signal.

14. The user equipment according to claim 13, the user equipment further comprising:
a detecting module, configured to detect a downlink signal of each cell, determine a serving cell of a user equipment, UE, and send obtained serving cell collection information to the anchor cell.

15. The UE according to claim 13, wherein, the receiving module is further configured to receive from the anchor cell explicit signaling used for notifying the TTI for sending the uplink retransmission signal corresponding to the uplink initial transmission signal; and
the UE further comprises:
a retransmitting module, configured to generate the uplink retransmission signal according to a CP type used by the uplink initial transmission signal when the receiving module receives the explicit signaling, and send the retransmission signal in the TTI notified in the explicit signaling.

16. The UE according to claim 13, the user equipment further comprising:
a storing module, configured to store the CP configuration information received by the receiving module, and provide the CP configuration information to the processing module.

17. A computer program product comprising computer program code which, when executed by a computer unit, will cause the computer unit to perform the steps of a method according to any one of claims 1 to 9.

## Patentansprüche

1. Verfahren zum Verarbeiten eines Aufwärtsstreckensignals, umfassend:
Empfangen eines Aufwärtsstreckensignals, das gemäß Konfigurationsinformationen des zyklischen Präfix CP erzeugt und durch ein Benutzergerät UE gesendet wird, wobei die CP-Konfigurationsinformationen dazu dienen, eine Abbildungsbeziehung zwischen einem von dem Aufwärtsstreckensignal verwendeten Übertragungszeitintervall TTI und CP-Typ zu identifizieren; und
Bestimmen eines CP-Typs, der einem TTI zum Empfangen des Aufwärtsstreckensignals entspricht, gemäß den CP-Konfigurationsinformationen und Verarbeiten des Aufwärtsstreckensignals gemäß dem bestimmten CP-Typ;
**dadurch gekennzeichnet, dass**
der CP-Typ einen ersten CP-Typ und einen zweiten CP-Typ umfasst und das Verfahren ferner Folgendes umfasst:
Neubestimmen eines TTI zum Senden eines Aufwärtsstrecken-Neuübertragungssignals, wenn ein CP-Typ, der einem voreingestellten TTI zum Senden des Aufwärtsstrecken-Neuübertragungssignals entspricht, von einem CP-Typ verschieden ist, der von einem durch das UE gesendeten Aufwärtsstrecken-Anfangsübertragungssignal verwendet wird, wobei das neubestimmte TTI nach dem voreingestellten TTI zum Senden des Aufwärtsstrecken-Neuübertragungssignals kommt und denselben CP-Typ wie das Aufwärtsstrecken-Anfangsübertragungssignal verwendet; und
nach Neubestimmung des TTI zum Senden eines Aufwärtsstrecken-Neuübertragungssignals Melden des neubestimmten TTI zum Senden des Aufwärtsstrecken-Neuübertragungssignals an das UE durch explizite Signalisierung und Melden des neubestimmten TTI zum Senden des Aufwärtsstrecken-Neuübertragungssignals an kooperative Zellen des UE.

2. Verfahren nach Anspruch 1, wobei das Verfahren ferner Folgendes umfasst:
Bestimmen der kooperativen Zellen des UE und Melden der CP-Konfigurations-informationen des UE an die kooperativen Zellen des UE.

3. Verfahren nach Anspruch 2, wobei die kooperativen Zellen des UE eine für anfängliche Übertragung verwendete versorgende Zelle und eine für Neuübertragung verwendete versorgende Zelle umfassen; und
Melden der CP-Konfigurationsinformationen des UE an die kooperativen Zellen des UE Folgendes umfasst:
Melden der CP-Konfigurationsinformationen des UE während der anfänglichen Übertragung zu der für anfängliche Übertragung versorgenden Zelle und Melden der CP-Konfigurationsinformationen des UE während Neuübertragung an die für Neuübertragung verwendete versorgende Zelle.

4. Verfahren nach einem der Ansprüche 2 bis 3, wobei das Bestimmen der kooperativen Zellen des UE eine beliebige oder beliebige Kombination der folgenden Alternativen umfasst:
Empfangen von durch das UE gesendeten Sammlungsinformationen versorgender Zellen und Bestimmen der kooperativen Zellen des UE gemäß den Sammlungs-informationen versorgender Zellen;
Empfangen einer durch jede Zelle gesendeten Benachrichtigungsnachricht und Bestimmen der kooperativen Zellen des UE gemäß der Benachrichtigungsnachricht, wobei die Benachrichtigungsnachricht dazu dient, anzugeben, ob die Zelle eine kooperative Zelle des UE ist; und
Empfangen von durch jede Zelle gesendeten Kanalzustandsinformationen zwischen dem UE und jeder Zelle und Bestimmen der kooperativen Zelle des UE gemäß den Kanalzustandsinformationen.

5. Verfahren nach Anspruch 1, wobei das Verfahren ferner Folgendes umfasst:
Einteilen des UE in ein TTI, das ein langes CP verwendet, wenn das UE auf ein Aufwärtsstrecken-Verzögerungsproblem stößt; und
Einteilen des UE in ein TTI, das ein kurzes CP verwendet, wenn das UE nicht auf ein Aufwärtsstrecken-Verzögerungsproblem stößt.

6. Verfahren nach Anspruch 1, wobei das Verfahren vor dem Empfangen des durch das UE gesendeten Aufwärtsstreckensignals ferner Folgendes umfasst: Senden von CP-Konfigurationsinformationen zu dem UE.

7. Verfahren zum Verarbeiten eines Aufwärtsstreckensignals, umfassend:
Empfangen von durch eine Ankerzelle gesendeten Konfigurationsinformationen des zyklischen Präfix bzw. CP durch ein Benutzergerät UE, wobei die CP-Konfigurationsinformationen dazu dienen, eine Abbildungsbeziehung zwischen einem von einem Aufwärtsstreckensignal verwendeten Übertragungszeitintervall TTI und einem CP-Typ zu identifizieren; und
Bestimmen eines CP-Typs, der dem TTI zum Senden des Aufwärtsstreckensignals entspricht, gemäß den CP-Konfigurationsinformationen, Erzeugen eines Aufwärtsstreckensignals gemäß dem bestimmten CP-Typ und Senden des Aufwärtsstreckensignals,
**dadurch gekennzeichnet, dass**
der CP-Typ einen ersten CP-Typ und einen zweiten CP-Typ umfasst und eine Länge des ersten CP-Typs größer als die des zweiten CP-Typs ist und das Verfahren ferner Folgendes umfasst:
wenn ein CP-Typ, der dem voreingestellten TTI zum Senden des Aufwärtsstrecken-Neuübertragungssignals entspricht und durch das UE gesendet wird, von einem CP-Typ verschieden ist, der von einem durch das UE gesendeten Aufwärtsstrecken-Anfangsübertragungssignal verwendet wird, Neubestimmen eines TTI zum Senden eines Aufwärtsstrecken-Neuübertragungssignals, wobei das neubestimmte TTI nach dem voreingestellten TTI zum Senden des Aufwärtsstrecken-Neuübertragungssignals kommt und denselben CP-Typ wie das Aufwärtsstrecken-Anfangsübertragungssignal verwendet.

8. Verfahren nach Anspruch 7, ferner umfassend: Detektieren eines Abwärtsstreckensignals jeder Zelle durch das UE, Bestimmen einer versorgenden Zelle eines UE und Senden von erhaltenen Sammlungsinformationen versorgender Zellen zu der Ankerzelle.

9. Verfahren nach Anspruch 7, ferner umfassend:
Empfangen von expliziter Signalisierung, die zum Melden einer TTI zum Senden eines Aufwärtsstrecken-Neuübertragungssignals dient, von der Ankerzelle, Erzeugen des Aufwärtsstrecken-Neuübertragungssignals gemäß dem von dem Aufwärtsstrecken-Anfangsübertragungssignal verwendeten CP-Typ und Senden des Neuübertragungssignals in dem in der expliziten Signalisierung gemeldeten TTI.

10. Basisstation BS, umfassend:
ein erstes Empfangsmodul (701), ausgelegt zum Empfangen eines Aufwärtsstreckensignals, das gemäß Konfigurationsinformationen des zyklischen Präfix CP erzeugt und durch ein Benutzergerät UE gesendet wird, wobei die CP-Konfigurationsinformationen dazu dienen, eine Abbildungsbeziehung zwischen einem von dem Aufwärtsstreckensignal verwendeten Übertragungszeitintervall TTI und einem CP-Typ zu identifizieren;
ein erstes Verarbeitungsmodul (702), ausgelegt zum Bestimmen eines CP-Typs, der einem TTI zum Empfangen des Aufwärtsstreckensignals entspricht, gemäß den CP-Konfigurationsinformationen und Verarbeiten des Aufwärtsstreckensignals gemäß dem bestimmten CP-Typ;
**dadurch gekennzeichnet, dass**
die BS ferner Folgendes umfasst:
ein Neuübertragungs-Überwachungsmodul, ausgelegt zum Neubestimmen eines TTI zum Senden eines Aufwärtsstrecken-Neuübertragungssignals, wenn ein CP-Typ, der einem voreingestellten TTI zum Senden des Aufwärtsstrecken-Neuübertragungssignals entspricht, von einem CP-Typ verschieden ist, der von einem durch das UE gesendeten Aufwärtsstrecken-Anfangsübertragungssignal verwendet wird, wobei das neubestimmte TTI nach dem voreingestellten TTI zum Senden des Aufwärtsstrecken-Neuübertragungssignals kommt und denselben CP-Typ wie das Aufwärtsstrecken-Anfangsübertragungssignal verwendet; nachdem das TTI zum Senden des Aufwärtsstrecken-Neuübertragungssignals neu bestimmt ist, wird das neubestimmte TTI zum Senden des Aufwärtsstrecken-Neuübertragungssignals dem UE durch explizite Signalisierung gemeldet; und das neubestimmte TTI zum Senden des Aufwärtsstrecken-Neuübertragungssignals wird kooperativen Zellen des UE gemeldet.

11. BS nach Anspruch 10, wobei die BS ferner Folgendes umfasst:
eine Zelle zur Bestimmung kooperativer Zellen, ausgelegt zum Bestimmen der kooperativen Zellen des UE; und
ein erstes Meldemodul, ausgelegt zum Melden der CP-Konfigurationsinformationen des UE an die durch das Modul zur Bestimmung kooperativer Zellen bestimmten kooperativen Zellen des UE.

12. BS nach Anspruch 10, wobei die BS ferner Folgendes umfasst:
ein Konfigurierungsmodul, ausgelegt zum Senden von CP-Konfigurationsinformationen zu dem UE.

13. Benutzergerät, umfassend:
ein Empfangsmodul, ausgelegt zum Empfangen von durch eine Ankerzelle gesendeten Konfigurationsinformationen des zyklischen Präfix bzw. CP, wobei die CP-Konfigurationsinformationen dazu dienen, eine Abbildungsbeziehung zwischen einem von einem Aufwärtsstreckensignal verwendeten Übertragungszeitintervall TTI und einem CP-Typ zu identifizieren;
ein Verarbeitungsmodul, ausgelegt zum Bestimmen eines CP-Typs, der einem TTI zum Senden des Aufwärtsstreckensignals entspricht, gemäß den von dem Empfangsmodul empfangenen CP-Konfigurationsinformationen, Erzeugen eines Aufwärtsstreckensignals gemäß dem bestimmten CP-Typ und Senden des Aufwärtsstreckensignals,
**dadurch gekennzeichnet, dass**
das Benutzergerät ferner Folgendes umfasst:
ein Neuübertragungs-Überwachungsmodul, ausgelegt zum Neubestimmen eines TTI zum Senden eines Aufwärtsstrecken-Neuübertragungssignals, wenn ein einem voreingestellten TTI zum Senden des Aufwärtsstrecken-Neuübertragungssignals entsprechender CP-Typ von einem CP-Typ verschieden ist, der von einem durch das UE gesendeten Aufwärtsstrecken-Anfangsübertragungssignal verwendet wird, wobei das neubestimmte TTI nach dem voreingestellten TTI zum Senden des Aufwärtsstrecken-Neuübertragungssignals kommt und denselben CP-Typ wie das Aufwärtsstrecken-Anfangsübertragungssignal verwendet.

14. Benutzergerät nach Anspruch 13, wobei das Benutzergerät ferner Folgendes umfasst:
ein Detektionsmodul, ausgelegt zum Detektieren eines Abwärtsstreckensignals jeder Zelle, Bestimmen einer versorgenden Zelle eines Benutzergeräts UE und Senden von erhaltenen Sammlungsinformationen versorgender Zellen zu der Ankerzelle.

15. UE nach Anspruch 13, wobei das Empfangsmodul ferner ausgelegt ist zum Empfangen von expliziter Signalisierung von der Ankerzelle, die zum Melden des TTI zum Senden des Aufwärtsstrecken-Neuübertragungssignals, das dem Aufwärtsstrecken-Anfangsübertragungssignal entspricht, dient; und
das UE ferner Folgendes umfasst:
ein Neuübertragungsmodul, ausgelegt zum Erzeugen des Aufwärtsstrecken-Neuübertragungssignals gemäß einem von dem Aufwärtsstrecken-Anfangsübertragungssignal verwendeten CP-Typ, wenn das Empfangsmodul die explizite Signalisierung empfängt, und Senden des Neuübertragungssignals in dem in der expliziten Signalisierung gemeldeten TTI.

16. UE nach Anspruch 13, wobei das Benutzergerät ferner Folgendes umfasst:
ein Speichermodul, ausgelegt zum Speichern der durch das Empfangsmodul empfangenen CP-Konfigurationsinformationen und Leiten der CP-Konfigurationsinformationen zu dem Verarbeitungsmodul.

17. Computerprogrammprodukt, das Computerprogrammcode umfasst, der, wenn er durch eine Computereinheit ausgeführt wird, bewirkt, dass die Computereinheit die Schritte eines Verfahrens nach einem der Ansprüche 1 bis 9 ausführt.

## Revendications

1. Procédé pour traiter un signal de liaison montante, comprenant les étapes suivantes :
recevoir un signal de liaison montante qui est généré conformément à des informations de configuration de préfixe cyclique, CP, et est envoyé par un équipement d'utilisateur, UE, où les informations de configuration de CP sont utilisées pour identifier une relation de mappage entre un intervalle de temps de transmission, TTI, et un type de CP qui est utilisé par le signal de liaison montante ; et
déterminer, conformément aux informations de configuration de CP, un type de CP correspondant à un TTI pour recevoir le signal de liaison montante, et traiter le signal de liaison montante conformément au type de CP déterminé,
**caractérisé en ce que** :
le type de CP comprend un premier type de CP et un second type de CP et le procédé comprend en outre les étapes suivantes :
redéterminer un TTI pour envoyer un signal de retransmission de liaison montante lorsqu'un type de CP correspondant à un TTI prédéfini pour envoyer le signal de retransmission de liaison montante est différent d'un type de CP utilisé par un signal de transmission initiale de liaison montante envoyé par l'UE, où le TTI redéterminé se situe après le TTI prédéfini pour envoyer le signal de retransmission de liaison montante, et utilise le même type de CP que le signal de transmission initiale de liaison montante ; et
après avoir redéterminé le TTI pour envoyer un signal de retransmission de liaison montante, notifier le TTI redéterminé pour envoyer le signal de retransmission de liaison montante à l'UE par l'intermédiaire d'une signalisation explicite et notifier le TTI redéterminé pour envoyer le signal de retransmission de liaison montante à des cellules coopératives de l'UE.

2. Procédé selon la revendication 1, le procédé comprenant en outre les étapes suivantes : déterminer les cellules coopératives de l'UE, et notifier les informations de configuration de CP de l'UE aux cellules coopératives de l'UE.

3. Procédé selon la revendication 2, dans lequel les cellules coopératives de l'UE comprennent une cellule de desserte utilisée pour une transmission initiale et une cellule de desserte utilisée pour une retransmission ; et
notifier les informations de configuration de CP de l'UE aux cellules coopératives de l'UE comprend les étapes suivantes :
notifier les informations de configuration de CP de l'UE au cours d'une transmission initiale à la cellule de desserte utilisée pour une transmission initiale, et notifier les informations de configuration de CP de l'UE au cours d'une retransmission à la cellule de desserte utilisée pour une retransmission.

4. Procédé selon l'une quelconque des revendications 2 à 3, dans lequel déterminer les cellules coopératives de l'UE comprend l'une quelconque des étapes suivantes ou toute combinaison parmi les étapes suivantes :
recevoir des informations de collecte de cellule de desserte envoyées par l'UE, et
déterminer les cellules coopératives de l'UE conformément aux informations de collecte de cellule de desserte ;
recevoir un message de notification envoyé par chaque cellule, et déterminer les cellules coopératives de l'UE conformément au message de notification, où le message de notification est utilisé pour indiquer si la cellule est une cellule coopérative de l'UE ; et
recevoir des informations d'état de canal entre l'UE et chaque cellule envoyées par chaque cellule, et déterminer la cellule coopérative de l'UE conformément aux informations d'état de canal.

5. Procédé selon la revendication 1, le procédé comprenant en outre les étapes suivantes :
planifier l'UE à un TTI qui utilise un CP long lorsque l'UE est confronté à un cas de retard de liaison montante ; et
planifier l'UE à un TTI qui utilise un CP court lorsque l'UE n'est pas confronté à un cas de retard de liaison montante.

6. Procédé selon la revendication 1, dans lequel, avant réception du signal de liaison montante envoyé par l'UE, le procédé comprend en outre l'étape suivante : envoyer des informations de configuration de CP à l'UE.

7. Procédé pour traiter un signal de liaison montante, comprenant les étapes suivantes :
recevoir, par l'intermédiaire d'un équipement d'utilisateur, UE, des informations de configuration de préfixe cyclique, CP, envoyées par une cellule d'ancrage, où les informations de configuration de CP sont utilisées pour identifier une relation de mappage entre un intervalle de temps de transmission, TTI, et un type de CP qui est utilisé par un signal de liaison montante ; et
déterminer, conformément aux informations de configuration de CP, un type de CP correspondant au TTI pour envoyer le signal de liaison montante, générer un signal de liaison montante conformément au type de CP déterminé, et envoyer le signal de liaison montante,
**caractérisé en ce que** :
le type de CP comprend un premier type de CP et un second type de CP, et une longueur du premier type de CP est plus grande que celle du second type de CP et le procédé comprend en outre :
si un type de CP qui correspond au TTI prédéfini pour envoyer le signal de retransmission de liaison montante et qui est envoyé par l'UE est différent d'un type de CP utilisé par un signal de transmission initiale de liaison montante envoyé par l'UE, redéterminer un TTI pour envoyer un signal de retransmission de liaison montante où le TTI redéterminé se situe après le TTI prédéfini pour envoyer le signal de retransmission de liaison montante, et utilise le même type de CP comme signal de transmission initiale de liaison montante.

8. Procédé selon la revendication 7, comprenant en outre les étapes suivantes : détecter, par l'intermédiaire de l'UE, un signal de liaison descendante de chaque cellule, déterminer une cellule de desserte de l'UE, et envoyer les informations de collecte de cellule de desserte obtenues à la cellule d'ancrage.

9. Procédé selon la revendication 7, comprenant en outre les étapes suivantes :
recevoir de la cellule d'ancrage une signalisation explicite utilisée pour notifier un TTI pour envoyer un signal de retransmission de liaison montante, générer le signal de retransmission de liaison montante conformément au type de CP utilisé par le signal de transmission initiale de liaison montante, et envoyer le signal de retransmission dans le TTI notifié dans la signalisation explicite.

10. Station de base, BS, comprenant:
un premier module de réception (701), configuré pour recevoir un signal de liaison montante qui est généré conformément à des informations de configuration de préfixe cyclique, CP, et est envoyé par un équipement d'utilisateur, UE, les informations de configuration de CP étant utilisées pour identifier une relation de mappage entre un intervalle de temps de transmission, TTI, et un type de CP qui est utilisé par le signal de liaison montante ;
un premier module de traitement (702), configuré pour déterminer, conformément aux informations de configuration de CP, un type de CP correspondant à un TTI pour recevoir le signal de liaison montante, et traiter le signal de liaison montante conformément au type de CP déterminé,
**caractérisée en ce que** :
la BS comprend en outre :
un module de surveillance de retransmission, configuré pour : redéterminer un TTI pour envoyer un signal de retransmission de liaison montante lorsqu'un type de CP correspondant à un TTI prédéfini pour envoyer le signal de retransmission de liaison montante est différent d'un type de CP utilisé par un signal de transmission initiale de liaison montante envoyé par l'UE, où le TTI redéterminé se situe après le TTI prédéfini pour envoyer le signal de retransmission de liaison montante, et utilise le même type de CP que le signal de transmission initiale de liaison montante ; après que le TTI pour envoyer le signal de retransmission de liaison montante a été redéterminé, le TTI redéterminé pour envoyer le signal de retransmission de liaison montante est notifié à l'UE par l'intermédiaire d'une signalisation explicite ; et le TTI redéterminé pour envoyer le signal de retransmission de liaison montante est notifié à des cellules coopératives de l'UE.

11. BS selon la revendication 10, la BS comprenant en outre :
une cellule de détermination de cellule coopérative, configurée pour déterminer les cellules coopératives de l'UE ; et
un premier module de notification, configuré pour notifier les informations de configuration de CP de l'UE aux cellules coopératives de l'UE déterminées par le module de détermination de cellule coopérative.

12. BS selon la revendication 10, la BS comprenant en outre :
un module de configuration, configuré pour envoyer des informations de configuration de CP à l'UE.

13. Équipement d'utilisateur, comprenant :
un module de réception, configuré pour recevoir des informations de configuration de préfixe cyclique, CP, envoyées par une cellule d'ancrage, où les informations de configuration de CP sont utilisées pour identifier une relation de mappage entre un intervalle de temps de transmission, TTI, et un type de CP qui est utilisé par un signal de liaison montante ;
un module de traitement, configuré pour déterminer, conformément aux informations de configuration de CP reçues par le module de réception, un type de CP correspondant à un TTI pour envoyer le signal de liaison montante, générer un signal de liaison montante conformément au type de CP déterminé, et envoyer le signal de liaison montante ;
**caractérisé en ce que** :
l'équipement d'utilisateur comprend en outre :
un module de surveillance de retransmission, configuré pour : redéterminer un TTI pour envoyer un signal de retransmission de liaison montante lorsqu'un type de CP correspondant à un TTI prédéfini pour envoyer le signal de retransmission de liaison montante est différent d'un type de CP utilisé par un signal de transmission initiale de liaison montante envoyé par l'UE, où le TTI redéterminé se situe après le TTI prédéfini pour envoyer le signal de retransmission de liaison montante, et utilise le même type de CP comme signal de transmission initiale de liaison montante.

14. Équipement d'utilisateur selon la revendication 13, l'équipement d'utilisateur comprenant en outre :
un module de détection, configuré pour détecter un signal de liaison descendante de chaque cellule, déterminer une cellule de desserte d'un équipement d'utilisateur, UE, et envoyer des informations de collecte de cellule de desserte obtenues à la cellule d'ancrage.

15. UE selon la revendication 13, dans lequel le module de réception est en outre configuré pour recevoir de la cellule d'ancrage une signalisation explicite utilisée pour notifier le TTI pour envoyer le signal de retransmission de liaison montante correspondant au signal de transmission initiale de liaison montante ; et
l'UE comprend en outre :
un module de retransmission, configuré pour générer le signal de retransmission de liaison montante conformément à un type de CP utilisé par le signal de transmission initiale de liaison montante lorsque le module de réception reçoit la signalisation explicite, et envoyer le signal de retransmission dans le TTI notifié dans la signalisation explicite.

16. UE selon la revendication 13, l'équipement d'utilisateur comprenant en outre :
un module de stockage, configuré pour stocker les informations de configuration de CP reçues par le module de réception, et délivrer les informations de configuration de CP au module de traitement.

17. Produit programme informatique comprenant un code de programme informatique qui, lorsqu'il est exécuté par une unité informatique, amènera l'unité informatique à exécuter les étapes d'un procédé selon l'une quelconque des revendications 1 à 9.
